# EUROPÄISCHE PATENTSCHRIFT

(11) **EP 1 845 013 B1**
(45) Veröffentlichungstag und Bekanntmachung des Hinweises auf die Patenterteilung: **15.07.2009**
(21) Anmeldenummer: 07004499.5
(22) Anmeldetag: 06.03.2007
(51) Int. Cl.: B62D 25/06, B62D 27/02

(54) **Dachstruktur für ein Kraftfahrzeug**
Roof structure for a motor vehicle
Structure de toit pour un véhicule automobile

(30) Priorität: 12.04.2006 DE 102006017147
(43) Veröffentlichungstag der Anmeldung: 17.10.2007
(73) Patentinhaber: Bayerische Motoren Werke Aktiengesellschaft, 80809 München (DE)
(72) Erfinder: Neubauer, Jürgen, 85276 Pfaffenhofen (DE); Sedlmaier, Hermann, 80807 München (DE); Artmann, Siegfried, 84130 Dingolfing (DE); Gruenn, Ralf, 85661 Forstinning (DE)

(56) Entgegenhaltungen:
- DE-A1- 10 360 350
- DE-A1-3102004 050 93
- JP-A- 2004 130 986
- JP-A- 2005 271 783

## Beschreibung

Die Erfindung bezieht sich auf eine Dachstruktur für ein Kraftfahrzeug, bestehend aus einem randseitig mit einem Karosserieteil aus Stahl verklebten Leichtmetall- und insbesondere Aluminiumdach, nach dem Oberbegriff des Patentanspruchs 1.

DE 102 004 050 933 beschreibt eine solcher Dachstruktur.

Es ist bekannt (DE 101 16 282 A1, DE 197 37 966 A1), zur Verbindung eines Kraftfahrzeugdachs aus Aluminium mit einem aus Stahl bestehenden Karosserieteil wegen der stark unterschiedlichen Materialeigenschaften und vor allem aus Korrosionsschutzgründen anstelle einer Schmelzfügeverbindung, also etwa einer Punktschweißung, eine Strukturklebung zu verwenden.

Problematisch bei derartigen Leichtmetalldächern ist der relativ große thermische Ausdehnungskoeffizient, welcher etwa doppelt so hoch wie bei einem vergleichbaren Stahldach liegt, und demzufolge es unter der Wirkung fertigungs- oder betriebsbedingter Temperaturschwankungen zu höchst störenden Verwerfungen des Leichtmetalldachs kommt. Um diesen zu begegnen, wird bei dem aus der DE 10 2004 050 933 A1 bekannten Aluminiumdach, welches über eine kombinierte Niet-/Klebeverbindung an dem aus Stahlblech gefertigten Fahrzeug-Seitenrahmen befestigt ist, ein längs der Verbindungsstelle verlaufender Wulst im Aluminiumblech ausgebildet, der sich temperaturabhängig biegeverformt und dadurch einen thermischen Dehnungsausgleich bewirkt. Ein derartiger Dehnungswulst im Sichtbereich des Kraftfahrzeugdachs beeinträchtigt jedoch das optische Erscheinungsbild und birgt außerdem die Gefahr eines Ermüdungsbruchs in der elastischen Biegezone.

Aufgabe der Erfindung ist es, die Dachstruktur der eingangs genannten Art so auszubilden, dass selbst große Wärmeausdehnungen des Leichtmetalldachs unter Beibehalt einer hohen Dauerfestigkeit der Dachstruktur ausgeglichen werden.

Diese Aufgabe wird erfindungsgemäß durch die Dachstruktur mit den Merkmalen des Patentanspruchs 1 gelöst.

Erfindungsgemäß werden die temperaturabhängigen Flächenänderungen des Leichtmetalldachs auf zwei wirkungsmäßig hintereinanderliegende und unterschiedlliche Elastizitäten verteilt, nämlich zum einen auf den biegeelastischen Flächenabschnitt in Form einer Sicke im Leichtmetalldach selbst und zum anderen auf die in Richtung der thermischen Flächenänderungen elastisch gestaltete, randseitige Klebstoffschicht zwischen Leichtmetalldach und Stahl-Karosserieteil, wodurch die zum Dehnungsausgleich erforderlichen mechanischen Belastungen und damit die Gefahr eines Ermüdungsbruchs an den elastisch verformbaren Dachbereichen deutlich reduziert werden und das äußere Erscheinungsbild und vor allem die Oberflächenqualität des Fahrzeugdachs im Wesentlichen unbeeinflusst von Temperaturschwankungen verzerrungsfrei erhalten bleiben.

Um das Elastizitätsverhalten der formelastischen Sicke zu verbessern, ist diese vorzugsweise doppelstufig ausgebildet und erstreckt sich durchlaufend über die gesamte Dachlänge.

Nach einer weiteren, besonders bevorzugten Ausführung der Erfindung verlaufen die gegenseitigen Klebeflächen von Leichtmetalldach und Karosserieteil in Richtung der Flächenausdehnung des Dachs, so dass sich durch einfache Querschnittsgestaltung der Klebstoffschicht in Verbindung mit einer entsprechenden Klebstoffwahl eine in Klebeflächen- und somit Wärmeausdehnungsrichtung elastische, hierzu senkrecht jedoch vergleichsweise steife Anbindung des Dachs am Karosserieteil erzielen lässt. Von wesentlicher Bedeutung für ein definiertes Elastizitätsverhalten der Klebstoffschicht ist die Einhaltung einer konstanten Klebeschichtdicke, was vorzugsweise durch Anordnung von Distanzelementen, zweckmäßigerweise in Form von gleichförmig in Längsrichtung des Klebespalts verteilten, im Klebeflächenabschnitt von Leichtmetalldach und/oder Karosserieteil vorgeprägten Noppen erreicht wird.

Eine besonders günstige Einbauposition außerhalb des Sichtbereichs der Dachstruktur besteht darin, dass sowohl die Sicke als auch die Klebeverbindung in dem - später durch eine Dachleiste abgedeckten - Dachkanal der Dachstruktur angeordnet sind.

Die Erfindung wird nunmehr anhand eines Ausführungsbeispiels in Verbindung mit den Zeichnungen näher erläutert. Es zeigen in stark schematisierter Darstellung:
- **Fig. 1**: eine perspektivische Ansicht des Dachbereichs einer Kraftfahrzeugkarosserie; und
- **Fig. 2**: einen vergrößerten Ausschnitt der erfindungsgemäßen Dachstruktur längs der Linie II-II der Fig. 1.

Die in den Fign. gezeigte Dachstruktur enthält ein Leichtmetalldach 1, beispielsweise aus Aluminium, welches im Bereich des Dachkanals 2 mit einem aus Stahlblech aus einer Außenhaut 3, einer Innenhaut 4 und einem Verstärkungsblech 5 hergestellten Karosserie-Seitenrahmen 6 verklebt ist. Die Klebeflansche 7 und 8 des Leichtmetalldachs 1 bzw. Seitenrahmens 6 verlaufen in Richtung der Flächenerstreckung und somit in Richtung der thermischen Flächenänderungen des Leichtmetalldachs 1.

In dem die innere Seitenwand des Dachkanals 2 bildenden Randbereich des Leichtmetalldachs 1 ist ein biegeelastischer Flächenbereich in Form einer doppelstufigen Sicke 9 ausgebildet, und in dem Klebeflansch 7 des Leichtmetalldachs 1 sind in Längsrichtung des Klebespalts gleichförmig verteilt Noppen 10 eingeprägt, die als Distanzelemente zur Sicherstellung einer konstanten Klebespaltdicke wirken.

Unter Berücksichtigung der Klebstoffeigenschaften werden die geometrischen Abmessungen der vorzugsweise aus einem Zweikomponentenkleber bestehenden Klebstoffschicht 11 so gewählt, dass diese eine relativ große Scherelastizität aufweist, jedoch eine vergleichsweise steife Anbindung des Leichtmetalldachs 1 am Seitenrahmen 6 bewirkt.

Durch die Klebstoffschicht 11 werden gemeinsam mit der doppelstufigen Sicke 9, die sich durchlaufend über die gesamte Dachlänge erstreckt, zwei wirkungsmäßig hintereinander liegende, einerseits formelastische (Sicke 9) und andererseits materialelastische (Klebstoffschicht 11) Dehnungszonen etwa gleich großen Elastizitätsgrads gebildet, an denen die thermischen Flächenänderungen des Leichtmetalldachs 1 jeweils anteilig aufgenommen und ausgeglichen werden.

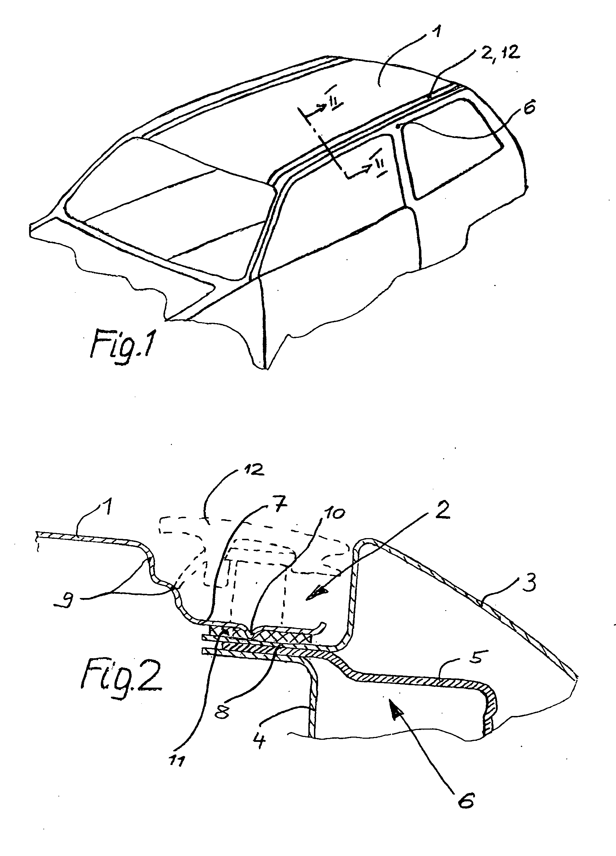

Nach Fertigstellung der Verklebung wird der Dachkanal 2 durch eine - in Fig. 2 gestrichelt dargestellte - Dachleiste 12 abgedeckt.

## Patentansprüche

1. Dachstruktur für ein Kraftfahrzeug, bestehend aus einem randseitig mit einem Stahl-Karosserieteil verklebten Leichtmetall-, insbesondere Aluminiumdach, **dadurch gekennzeichnet, dass**
das Leichtmetalldach (1) im Randbereich zwei wirkungsmäßig in Richtung der Wärmeausdehnung des Dachs hintereinander liegende und unterschiedliche Elastizitäten (9, 11) aufweist, von denen die randfernere formelastisch als längs des Randbereichs verlaufende Biegezone (9) und die randnähere materialelastisch als nachgiebig gestaltete Verklebung (11) zwischen Dach (1) und Karosserieteil (6) ausgebildet ist.

2. Dachstruktur nach Anspruch 1, **dadurch gekennzeichnet, dass**
sich die Biegezone (9) durchlaufend über die gesamte Dachlänge erstreckt.

3. Dachstruktur nach Anspruch 1 oder 2, **dadurch gekennzeichnet, dass**
die Biegezone als doppelstufige Sicke (9) ausgebildet ist.

4. Dachstruktur nach einem der vorhergehenden Ansprüche, **dadurch gekennzeichnet, dass**
die miteinander verklebten Randabschnitte (7, 8) von Leichtmetalldach (1) und Karosserieteil (6) in Richtung der Flächenausdehnung des Dachs verlaufen und die Verklebung (11) in Scherrichtung elastisch ausgebildet ist.

5. Dachstruktur nach einem der vorhergehenden Ansprüche, **dadurch gekennzeichnet, dass**
zur Erzielung einer konstanten Klebespaltdicke Distanzelemente zwischen den miteinander verklebten Randabschnitten (7, 8) von Leichtmetalldach (1) und Karosserieteil (6) angeordnet sind.

6. Dachstruktur nach Anspruch 5, **dadurch gekennzeichnet, dass**
als Distanzelemente punktförmig in den Randabschnitt (7; 8) von Leichtmetalldach (1) und/oder Karosserieteil (6) eingeprägte Noppen (10) vorgesehen sind.

7. Dachstruktur nach Anspruch 6, **dadurch gekennzeichnet, dass**
die Noppen (10) in Längsrichtung des Klebespalts gleichförmig verteilt sind.

8. Dachstruktur nach einem der vorhergehenden Ansprüche, **dadurch gekennzeichnet, dass**
die Verklebung (11) im Dachkanal (2) des Kraftfahrzeugs angeordnet ist.

9. Dachstruktur nach Anspruch 8, **dadurch gekennzeichnet, dass**
die Verklebung (11) im Dachkanalgrund angeordnet ist.

10. Dachstruktur nach Anspruch 8 oder 9, **dadurch gekennzeichnet, dass**
die formelastisch wirkende Biegezone (9) in der vom Randbereich des Leichtmetalldachs (1) gebildeten Dachkanal-Seitenwand angeordnet ist.

## Claims

1. A roof structure for a motor vehicle, comprising a light metal, especially an aluminium, roof stuck at one side to a steel body part, **characterised in that**
in the edge region, the light-metal roof (1) has two different elasticity regions (9, 11) acting one behind the other in the direction of thermal expansion of the roof, wherein the bending zone (9) more remote from the edge and extending elastically along the edge region, and the zone nearer the edge, are both made of elastic material in the form of a flexible stuck part (11) between the roof (1) and the body part (6).

2. A roof structure according to claim 1, **characterised in that**
the bending zone (9) extends continuously over the entire length of the roof.

3. A roof structure according to claim 1 or claim 2, **characterised in that**
the bending zone is in the form of a bead or corrugation (9) in two steps.

4. A roof structure according to any of the preceding claims, **characterised in that**
the stuck-together edge portions (7, 8) of the light-metal roof (1) and of the body part (6) extend in the direction of planar expansion of the roof, and the stuck part (11) is made elastic in the shear direction.

5. A roof structure according to any of the preceding claims, **characterised in that**
in order to obtain a constant adhesion-gap thickness, spacer elements are disposed between the stuck-together edge portions (7, 8) of the light-metal roof (1) and of the body part (6).

6. A roof structure according to claim 5, **characterised in that**
the spacer elements are provided at points in knobs (10) impressed into the edge portion (7; 8) of the light-metal roof (1) and/or of the body part (6).

7. A roof structure according to claim 6, **characterised in that**
the knobs (10) are uniformly distributed in the longitudinal direction of the adhesion gap.

8. A roof structure according to any of the preceding claims, **characterised in that**
the stuck part (11) is disposed in the roof channel (2) of the motor vehicle.

9. A roof structure according to claim 8, **characterised in that**
the stuck part (11) is disposed at the base of the roof channel.

10. A roof structure according to claim 8 or claim 9, **characterised in that**
the elastically shaped bending zone (9) is disposed in the roof-channel side wall formed by the edge region of the light-metal roof (1).

## Revendications

1. Structure de toit de véhicule automobile, composée d'un toit en métal léger, notamment en aluminium, collé du côté du bord à une pièce de carrosserie en acier,
**caractérisée en ce que**
le toit en métal léger (1) présente dans la zone de son bord, deux flexibilités (9, 11) différentes, situées l'une derrière l'autre dans la direction d'action de la dilatation thermique du toit telles que la plus éloignée du bord est une zone de flexion (9), ayant une forme élastique, dirigée le long de la zone du bord, et la plus proche du bord, est en matière élastique, réalisée sous la forme d'un collage (11), souple, entre le toit (1) et la partie de carrosserie (6).

2. Structure de toit selon la revendication 1,
**caractérisée en ce que**
la zone de flexion (9) s'étend en continu sur toute la longueur du toit.

3. Structure de toit selon la revendication 1 ou 2,
**caractérisée en ce que**
la zone de flexion est réalisée sous la forme d'une moulure (9) à deux niveaux.

4. Structure de toit selon l'une des revendications précédentes,
**caractérisée en ce que**
les zones de bord (7, 8) collées l'une à l'autre et faisant partie du toit en métal léger (1) et de la pièce de carrosserie (6), s'étendent dans la direction de l'extension de la surface du toit, et
le collage (11) est élastique dans le sens du cisaillement.

5. Structure de toit selon l'une des revendications précédentes,
**caractérisée en ce que**
pour obtenir une épaisseur d'intervalle de collage constante, on réalise des éléments d'écartement entre les zones de bord (7, 8) collées l'une à l'autre et appartenant au toit en métal léger (1) et à la pièce de carrosserie (6).

6. Structure de toit selon la revendication 5,
**caractérisée en ce que**
les éléments d'écartement, sont des bossages (10) ponctuels, imprimés dans la zone du bord (7, 8) du toit en métal léger (1) et/ou de la partie de carrosserie (6).

7. Structure de toit selon la revendication 6,
**caractérisée en ce que**
les bossages (10) sont répartis régulièrement dans la direction longitudinale de l'intervalle de collage.

8. Structure de toit selon les revendications précédentes,
**caractérisée en ce que**
le collage (11) est prévu dans le canal (2) du toit du véhicule automobile.

9. Structure de toit selon la revendication 8,
**caractérisée en ce que**
le collage (11) est prévu au fond du canal du toit.

10. Structure de toit selon la revendication 8 ou 9,
**caractérisée en ce que**
la zone de flexion (9) agissant par élasticité de forme, est prévue dans la paroi latérale de canal de toit constituée par la zone du bord du toit en métal léger (1).
